# EUROPEAN PATENT SPECIFICATION

(11) **EP 3 147 091 B1**
(45) Date of publication and mention of the grant of the patent: **06.03.2019**
(21) Application number: 16188633.8
(22) Date of filing: 13.09.2016
(51) Int. Cl.: B27D 5/00, B32B 3/12, E04C 2/36, E04C 2/38, B32B 15/20, B32B 27/00, B32B 3/08

(54) **METHOD FOR APPLYING AN EDGE-BANDING ELEMENT TO A LIGHTWEIGHT PANEL**
VERFAHREN ZUR APPLIKATION EINES KANTENELEMENTS AUF EINER LEICHTEN PLATTE
PROCEDE D'APPLICATION D'UNE BANDE DE CHANT SUR UN PANNEAU LEGER

(30) Priority: 23.09.2015 IT UB20153838
(43) Date of publication of application: 29.03.2017
(73) Proprietor: Samec S.p.A., 47899 Serravalle (SM)
(72) Inventor: Muratori, Antonio, 47899 Serravalle (SM)
(74) Representative: Fisauli, Beatrice A. M.

(56) References cited:
- EP-A1- 2 123 438
- EP-A2- 1 997 597
- DE-B3-102004 022 018
- DE-B3-102007 014 832
- DE-U1-202009 011 402
- IT-A1- BO20 110 509

## Description

The invention relates to a method for applying an edge banding element to an edge portion of a lightweight panel as per the preamble of claim 1. Such a method is disclosed by document EP 1 997 597 A2.

In the woodworking industry there are known machines for applying decorative edge banding elements, typically strips of plastic material, to the perimeter edges of panels, tables, shelves or the like.

EP 1785243 A1 illustrates a known edge banding machine comprising means adapted to feed a strip of edge banding material toward a gluing assembly, and a pressing roller.

The gluing unit comprises a roller adapted to deposit an adhesive material on one side of the strip destined to abut the perimeter edge of the element to be edge banded. The pressing roller provides for moving and compressing the strip on said edge to consolidate the fixing thereof.

Alternatively, in other machines, the gluing roller applies the adhesive material directly to the edge portion of the panel, immediately before the strip is abutted thereon.

Known apparatus of this type are suitable for applying edge banding elements to solid panels, i.e. panels with an internal structure characterized by a homogeneous section of substantially constant density, such as wood fiber panels (chipboard, MDF, HDF) or similar materials.

In fact, on these panels, the perimeter edge offers a continuous abutment surface, whether rectilinear or curved, that acts as support for the edge banding element and the related adhesive material, or glue, used to join them together.

In the furnishing sector and more in general in the building sector there are known lightweight panels provided with a sandwich structure.

This structure comprises an intermediate layer, known as core, enclosed between a first outer layer and a second outer layer, known as skins.

In general, the intermediate layer is made with a cellular, for example honeycomb, structure.

The material of the outer layers and of the intermediate layer can vary as a function of the strength (or rigidity) provided by the panel and by its field of use.

Known examples are sandwich panels used to produce furniture in which the outer layers are made of wood or similar materials, and the intermediate layer is made of paper or cardboard.

In this sector, but also in others such as the building and transport sectors, in particular the ship and aeronautical sectors, there are also known sandwich panels in which the intermediate layer and the outer layers are made of metal, typically aluminum, or plastic materials.

Due to the structure of the intermediate layer, the perimeter edge of these panels, after being cut, has a series of lamellar elements, which extend between the two outer layers, alternated with cavities recessed with respect to the edge of the panel.

The structure of the aforesaid perimeter edge has a relatively limited surface exposed to the gluing means, which would not be capable of adequately securing the edge banding element if applied with known apparatus such as the one described above.

For this purpose, there are known methods and related apparatus for applying an edge banding element to a lightweight composite panel.

A known method provides for applying a support element, at the perimeter edge of the panel, which offers a suitable abutment surface for applying the edge banding element.

To implement the aforesaid method, it is necessary to mill the edge portions of the panel, already cut to size, to obtain a groove adapted to accommodate a support element, such as a bar or the like, having a shape substantially complementary to said groove.

Once the support element has been fitted in the groove and fixed by means of adhesives, the outer abutment surface of the support element is ground before gluing the edge banding element to this surface.

Subsequent trimming operations can be required to eliminate any excess portions of the edge banding element.

This method is particularly slow and laborious to apply due to the number of operations to be performed.

Moreover, it requires the use of different equipment to perform the aforesaid operations, which entails an increase in the costs to be sustained for their purchase and maintenance.

In other known methods, described for example in EP 1640128 A1, EP 2052822 A1, US 2008/202065 A1, the support element is fed and applied substantially at the same time as the edge banding element.

EP 2133184 A1 illustrates a method in which the support element comprises a strip that is shaped in a corrugated manner before its insertion into the groove obtained on the edge portion of the panel.

EP 2110228 A1 illustrates a method in which the support element comprises a hardening expanding composition injected into the groove obtained on the edge portion of the panel.

This composition is shaped during hardening, or milled subsequently, to define the abutment surface to which the edge banding element is applied.

EP 2298517 A1 illustrates a method in which the support element is fed in semisolid state and is forced under pressure into a seat obtained in the edge portion of the panel.

The aforesaid method also provides for grinding of the abutment face of the support element to which the edge banding element will subsequently be applied.

DE102004022018B3 illustrates a method in which a strip of expansible adhesive composition adapted to create a contact and abutment area for the edge banding element is injected into the inner face of the upper and lower layers. An expanding adhesive composition is also applied to the inner face of the edge banding element prior to its application.

According to this method, there is provided a subsequent step of milling the excess portions of the edge banding element.

All the methods described above, in order to be implemented, require complex and costly machinery and large spaces in which to position the aforesaid machinery to set up a production line.

EP 0584041 A1 describes a method for applying an edge banding element to a lightweight panel in which said edge banding element is provided with a plurality of projecting flange elements, and in which the edge banding element is pressed against the edge portion of the panel so that the flange elements engage the intermediate layer of the panel to constrain the edge banding element.

However, the edge banding element applied with this method typically has a lower tearing resistance with respect to edges applied with other known methods.

Moreover, the aforesaid method entails a high production cost of the panel, mainly due to the cost of the edge banding element provided with the flange elements.

Unlike the preceding patents, EP1997597A3 illustrates a method for edge banding a composite panel in which a portion of the intermediate honeycomb layer in proximity of the edge is deformed and compressed so as to offer a larger surface available for spreading of the adhesive material to which the edge band is then directly applied. Therefore, this method, during compression of the intermediate layer, provides for the simultaneous removal of a part of two outer layers between which the aforesaid portion to be compressed is interposed. This operation, as in the other known methods, firstly takes more time with respect to the time necessary to simply cut the panel to size. Moreover, the aforesaid method is difficult to apply to lightweight panels with intermediate layers made of paper, cardboard or plastic. In fact, unlike metal, these materials are characterized by spring back, which makes complete compaction of the intermediate layer in proximity of the edge of the panel difficult.

Finally, the aforesaid removal and compression operation requires the use of a specific tool, which can only operate on a panel of a given thickness. This makes it necessary for the manufacturer to provide the edge banding machine with a set of tools suitable to cover the entire range of panels of different thickness and wastes further time to replace the tool when the size (thickness) of the panel to be machined changes.

In this context, the object of the present invention is to propose a method for applying an edge banding element to a lightweight panel that solves the problems of the prior art cited above.

Therefore, an object of the present invention is to propose a method that involves the implementation of a smaller number of operations to apply an edge banding element to an edge portion of a lightweight panel.

Another object of the present invention is to provide a faster and simpler method with respect to known methods.

Yet another object of the present invention is to provide a method that allows an edge banding element to be applied, in a stable and durable manner, to lightweight panels of different material, such a paper, cardboard, plastic, aluminum or the like.

These objects are achieved by the method of the present invention, that allows an edge banding element to be applied to a lightweight panel that is provided with a first outer layer, with a second outer layer and with an intermediate layer, which, after the panel has been cut to size, at an edge portion, has a plurality of cavities delimited laterally by lamellar elements. These lamellar elements extend between the first layer and the second layer and have a front edge substantially aligned with the edge of the panel.

According to the invention, the method, after cutting of the panel, comprises at least one step consisting of depositing, in at least one of said cavities of the panel, an adhesive material in the form of a bead that at least partially fills said cavity. Said bead is deposited against, and therefore in contact with, at least one face of a lamellar element. Moreover, the bead preferably projects at least partially beyond the aforesaid edge of the panel.

The method according to the invention also comprises a step consisting of feeding and guiding an edge banding element toward the edge portion of the panel.

Moreover, the method comprises a subsequent step consisting of abutting the edge banding element with the edge portion of the panel so that an inner face of the edge banding element contacts the bead of adhesive material.

In practice, the bead of adhesive material places the lamellar element, part of the intermediate layer, and the edge banding element in contact. This allows this latter, after the adhesive material has hardened completely, to be maintained integral with the edge portion of the panel.

The way with which the aforesaid bead of adhesive material is deposited allows the structure of the intermediate layer, which by nature does not offer surfaces useful for gluing, to nonetheless be used to solidly anchor the edge banding element, without requiring to perform further machining operations for preparation of the panel after cutting.

Therefore, the method of the invention allows the edge banding element to be applied, directly after cutting, also to lightweight panels with a honeycomb or similar structure.

In an aspect of the invention, the adhesive material is preferably deposited in a plurality or in all of cavities of the intermediate layer.

The edge banding element is thus made stable along the whole of its extension even when it is of limited thickness and is consequently more deformable.

In another aspect of the invention, the bead of adhesive material can extend between the inner faces of the first outer layer and of the second outer layer, in contact with at least one of these.

In this way, the stresses exerted on the edge banding element can be transmitted through the bead of adhesive material, not only to the intermediate layer, but also to one or to both of the outer layers of the panel.

The edge banding element is thus firmly fixed to the panel even where the intermediate layer comprises a low strength or particularly flexible material.

In another aspect of the invention, the bead can be deposited so as to have a portion projecting beyond the edge portion of the panel.

When the inner face of the edge banding element encounters the bead of adhesive material, this latter is deformed, expanding the contact area and increasing the fixing strength.

In another aspect of the invention, the bead has a substantially constant width. Typically, the width of the bead varies from 1 mm to 6 mm. Preferably, it is between 2 mm and 4 mm. This width is substantially the same for all the beads deposited on the intermediate layer.

In another aspect of the invention, the inner surface of the edge banding element in contact with the adhesive material is preferably between 30% and 60% of the total inner surface.

This percentage allows the edge banding element to be suitably stabilized and at the same time prevents, following abutting of this element on the edge of the panel, the adhesive material from being forced out of the cavity, thus making it necessary to clean, trim or grind the edges of the panel.

This condition is reached by appropriate dosing of the amount of adhesive material deposited in the cavities.

To avoid the problem cited above, the bead of adhesive material is deposited substantially parallel to the lamellar element.

In this way, the adhesive material is distributed evenly into the thickness of the panel, avoiding accumulations that can cause it to seep out after abutting of the edge banding material.

To make the edge banding element even more stable, according to another aspect of the invention, the adhesive material can also be applied to the front edge of the first outer layer, of the second outer layer, or of both.

In another aspect of the invention, the adhesive material can comprise a polyurethane glue (PUR).

This type of glue, normally used in fluid or semi-fluid state (melted or partially melted), facilitates distribution inside the cavity and in contact with the lamellar element.

Moreover, this adhesive material, being widely used in known edge banding apparatus, allows these apparatuses to be used to implement the method of the invention without making considerable changes or adjustments thereto.

More in detail, according to another aspect of the invention, the step consisting of depositing the adhesive material in the cavity is carried out by a distribution means. This distribution means is preferably structured to feed the adhesive material in the form of an extrusion in the form of a thin layer. Advantageously, according to an aspect of the invention, the distribution means can be oriented so that the thin layer of adhesive material dispensed is oriented substantially parallel to the lamellar element.

In this way, the bead of adhesive material, if deposited against a lamellar element, has a more or less constant thickness.

An apparatus for applying an edge banding element to a lightweight panel, as described above, comprises at least:
- means for feeding and moving a panel along a working direction;
- distribution means adapted to deposit an adhesive material at the edge portion of the panel; and
- presser means adapted to abut the edge banding element on the edge portion of the panel.

Said distribution means comprise at least one nozzle provided with a slit to dispense the adhesive material, in fluid or semi-fluid state, in the form of a thin layer. According to an aspect of the invention, said nozzle is controlled by control means adapted to control the flow of the adhesive material so that it is deposited in the form of a bead in at least one of said cavities and, preferably, against at least one face of a lamellar element.

Said distribution means are provided with regulation means to regulate the dimension (height) of the flow of adhesive material so that the bead extends between the inner faces of the first outer layer and of the second outer layer, in contact with at least one of these faces.

The distribution means are provided with adjustable support means that allow the direction of dispensing of the flow of adhesive material to be varied with respect to the direction of movement of the panel in the apparatus.

In this way adhesion of the adhesive material to the wall of the lamellar element is facilitated even when the cavity is only partially filled.

Further characteristics and advantages of the present invention will be more apparent from the description of a non-limiting example of embodiment, with reference to the accompanying drawings, wherein:
- Figs. 1a and 1b are respectively a perspective view and a plan view of an example of lightweight panel;
- Figs. 2a to 2c are perspective views of a portion of an edge banding apparatus during different steps of edge banding of the panel of the figure;
- Figs. 3a to 3c are plan views of the apparatus of Fig. 2, in the respective operating steps;
- Fig. 4 is a front view of a lightweight panel edge banded with an apparatus and with a method according to the invention;
- Figs. 5a and 5b are two front views of another type of lightweight panel, respectively before and after the step of depositing the adhesive material.

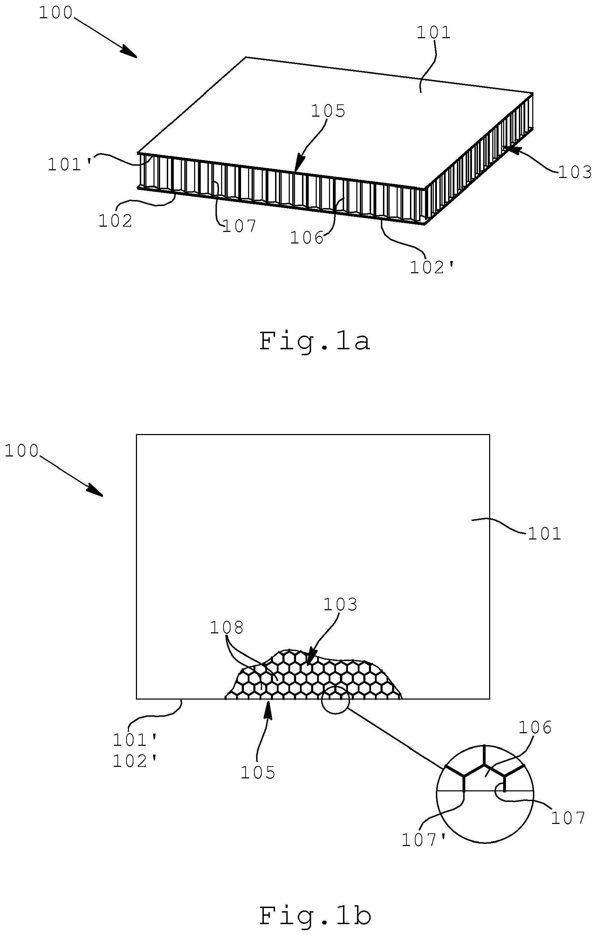

In Figs. 1a and 1b, the numeral 100 indicates as a whole a lightweight or sandwich panel.

This panel 100 comprises an intermediate layer 103 interposed between a first outer layer 101 and a second outer layer 102, substantially flat and facing each other.

The intermediate layer 103 has a cellular structure, for example a honeycomb structure, made with a light material and typically less rigid and less strong with respect to the material of the outer layers 101, 102.

Figs. 1a and 1b illustrate a panel 100 that has been cut to size and is ready to receive an edge banding element on an edge portion 105.

After cutting, the intermediate layer 103, at said edge portion 105, has a plurality of cavities 106 delimited by lamellar elements 107.

In practice, the cavities 106 are part of the cells 108 of the lightweight structure of said intermediate layer 103; the lamellar elements 107 instead comprise a portion of the walls that delimit said cells, which during cutting to size of the panel 100 are severed in a more or less random manner.

In this manner, the front edges 107' of the lamellar elements 107 lie on the plane tangent to the front edges 101' and 102' respectively of the first and of the second outer layer 101, 102.

In the example illustrated, these lamellar elements 107 extend between the inner faces of the first and of the second outer layer 101, 102 and are substantially perpendicular thereto.

Nonetheless, the method according to the invention is suitable for applying an edge banding element to a panel 100 with the intermediate layer 103 having a different geometry in which, for example, the lamellar elements 107, produced by cutting the panel, are arranged transversely, or tilted, with respect to the outer layer 101, 102.

Moreover, according to the invention, the method of edge banding described herein is suitable for edge banding panels with layers that can be made of different materials as a function of the field of use of the panel and of the strength and/or rigidity it must have.

However, tests performed by the applicant show that the method of edge banding of the present invention is particularly effective when used on lightweight panels in which the intermediate layer is made of a metal material, for example aluminum, or plastic materials.

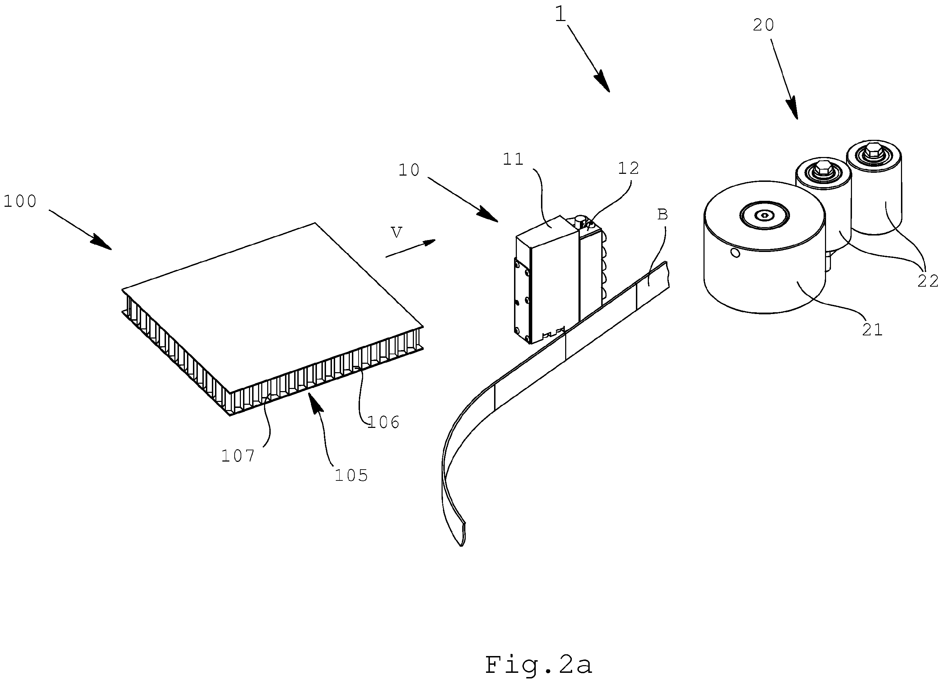

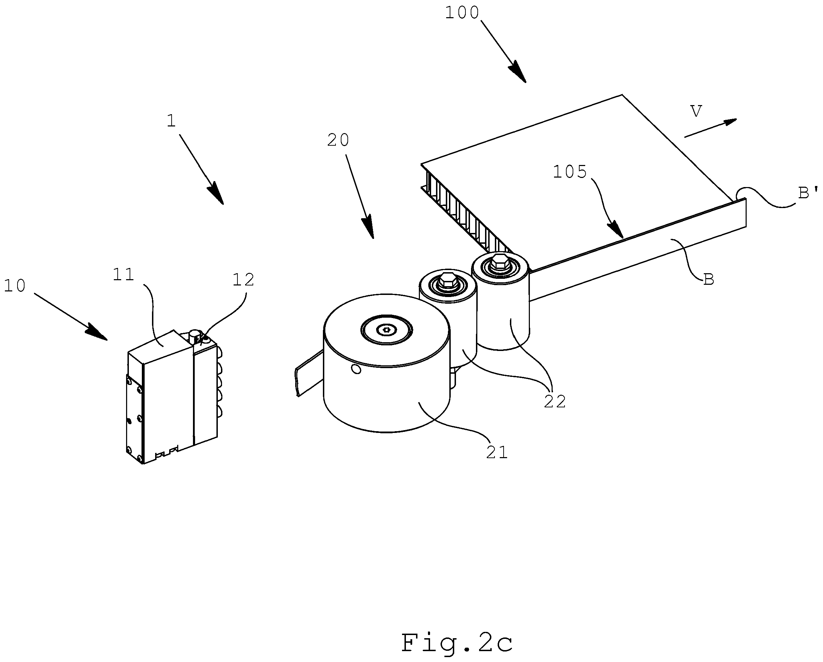

With reference to Figs. 2a to 2c, there is illustrated an edge banding apparatus 1 adapted to apply and fix an edge banding element B to the edge portion 105 of a lightweight panel or equivalent element.

The edge banding element B is typically a strip that is at least partially flexible, provided with an inner face B' at least partially flat adapted to abut the edge portion 105 of the panel 100.

The panel 100 is moved through the apparatus 1 along a working direction V, indicated with an arrow, by means of known type such as bands, rollers, belts, rubber tracks or the like, not illustrated in the figures.

The apparatus 1 comprises distribution means 10 adapted to deposit an adhesive material at the edge portion 105 of the panel and presser means 20 adapted to abut the edge banding element B on said edge portion 105.

The presser means 20 can comprise, for example, a roller 21, rotating about its axis, which compresses the strip of the edge banding element B against the edge portion 105 of the panel 100 while this is fed in the working direction V.

Further rollers 22 can be provided downstream of the roller 21 to maintain the edge banding element B pressed against the edge portion of the panel for a longer time.

Other equivalent presser means of known type can be used within the scope of the present invention.

The distribution means 10 can comprise pumping means, not illustrated, adapted to feed an adhesive material toward a gluing head 11.

Preferably the adhesive material comprises a polyurethane glue (PUR) or the like.

This adhesive material is distributed from the gluing head 11 in fluid or semi-fluid form.

For this purpose, the pumping means are generally associated with heating means adapted to heat the adhesive material, which at room temperature is solid, to at least partially melt it.

Preferably the gluing head is provided with a nozzle 12 from which the adhesive material is dispensed.

Advantageously, this nozzle can comprise a slit of narrow and elongated shape so that the adhesive material is dispensed in the form of a thin layer.

The height of the slit can be varied as a function of the thickness of the panel 100 so that the thin layer of adhesive material is deposited only at the edge portion 105, without soiling the outer faces of the outer layers 101, 102.

Preferably the gluing head 11, and therefore the nozzle 12, is controlled by control means, not illustrated in the figure.

These control means are configured to adjust the amount of adhesive material dispensed and the start and stop times of dispensing of the aforesaid material.

Preferably the gluing head 11 is provided with adjustable support means, not illustrated in the figure, configured to rotate the head.

In this way it is possible to vary the tilt of the slit of the nozzle 12, and therefore the tilt of the thin layer of adhesive material dispensed therefrom, as a function of the arrangement of the lamellar elements 107 of the intermediate layer 103 of the panel 100.

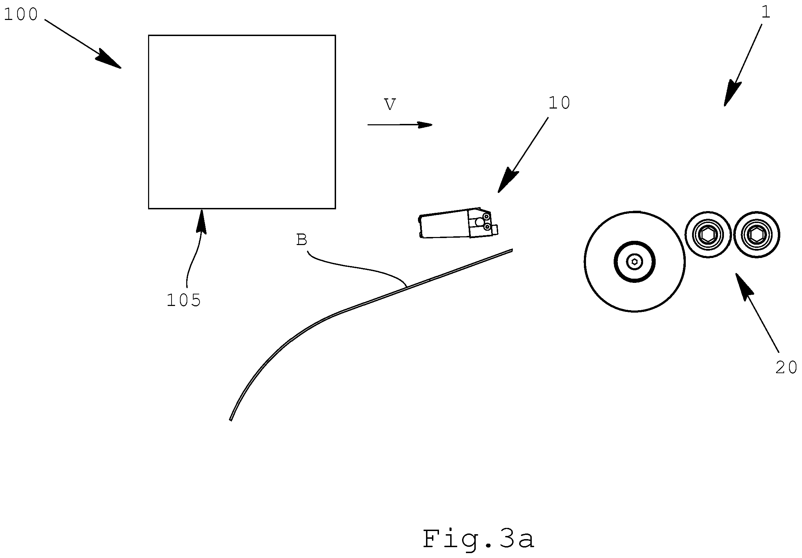

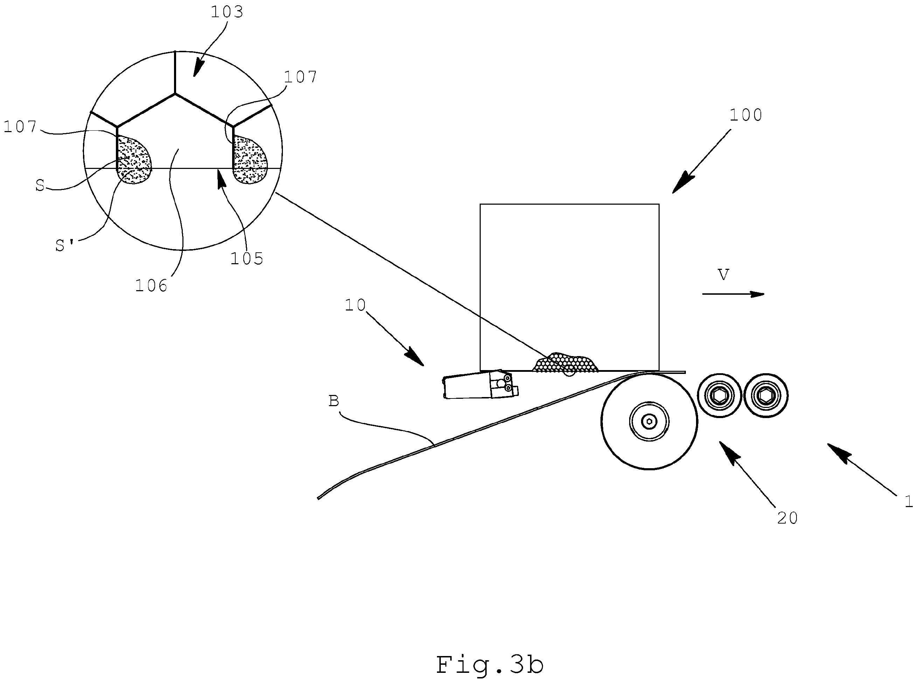

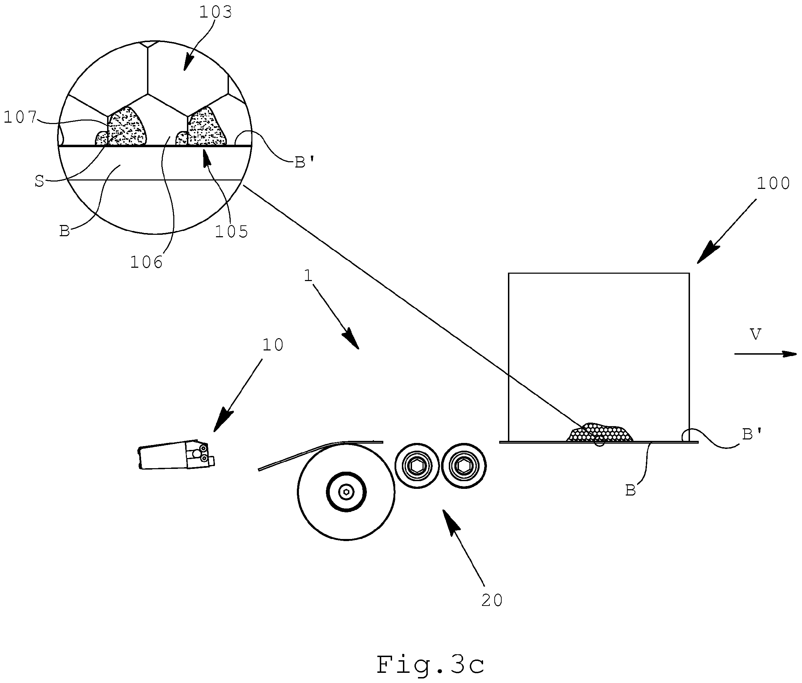

Below there is described, with reference to Figs. 2a to 2c, and to Figs. 3a to 3c, the method for applying the edge banding element B to the panel 100 described above.

This method can be implemented on a previously cut and formed panel 100 having the characteristics and conditions listed above.

As a function of the type of system, this cutting and forming operation may or may not be an integral part of the edge banding method.

Subsequently, the adhesive material is deposited in at least one of the cavities 106. According to the invention, this operation to deposit the adhesive material is performed so that it is deposited in the form of a bead S against at least one face of a lamellar element 107.

According to a preferred embodiment, this operation to deposit the adhesive material is repeated in a plurality or in all the cavities 106 facing the edge portion 105.

During this step, the distribution means 10 are controlled so as to dispense the adhesive materials continuously or alternately so as to at least partially fill the various cavities 106.

Moreover, if necessary, the distribution means 10 can be oriented so that the thin layer of adhesive material delivered from the nozzle is substantially parallel to the face of the lamellar element.

Preferably, these cavities are only partially filled with the adhesive material, to prevent it from being forced out of the edge portion 105 when the edge banding element is pressed against it.

Movement of the panel 100 along the working direction, combined with the dispensing direction of the adhesive material, facilitates adhesion of this latter with at least one wall of the lamellar element 107.

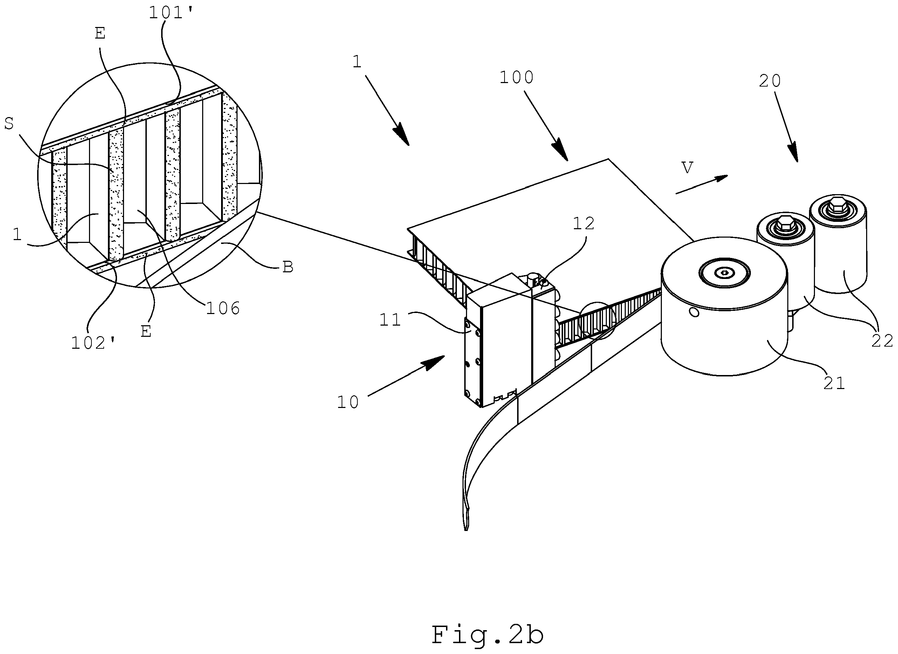

Preferably the quantity of adhesive material dispensed is such as to form a bead S that has a portion S' projecting slightly beyond the edge portion 105 of the panel 100 and beyond the front edge 107' of the lamellar element 107, as is visible in the detail of Fig. 2b.

As will be better explained below, this allows the edge banding element B to come into contact with the bead of adhesive material on a larger surface.

In a preferred embodiment, the bead S extends in contact with at least one inner face 101a, 102a of the outer layers 101, 101, and preferably with both.

According to another embodiment, the method comprises depositing a bead E of adhesive material also along a front edge 101', 102' of the first outer layer 101, of the second outer layer 102, or of both.

The extension of the bead of material S and any deposit of further beads E is regulated by acting on the regulation means of the distribution means 10 that vary the extension of the slit of the nozzle 12.

After or simultaneously to the step of depositing the adhesive material, the edge banding element B is fed and guided to move it toward the edge portion 105 to which it must be applied.

This operation is implemented with known means and therefore will not be described in detail.

Subsequently, said edge banding element B is abutted with the edge portion of the panel 105.

In this step, the inner face B' of the edge banding element B contacts the beads S deforming them and pressing them into the cavities 106, until the element is abutting against the front edges 101', 102' of the outer layers 101, 102.

Partial filling of the cavity 106 allows the bead S to be spread on said inner face B' but without seeping beyond said front edges 101', 102' of the outer layers 101, 102.

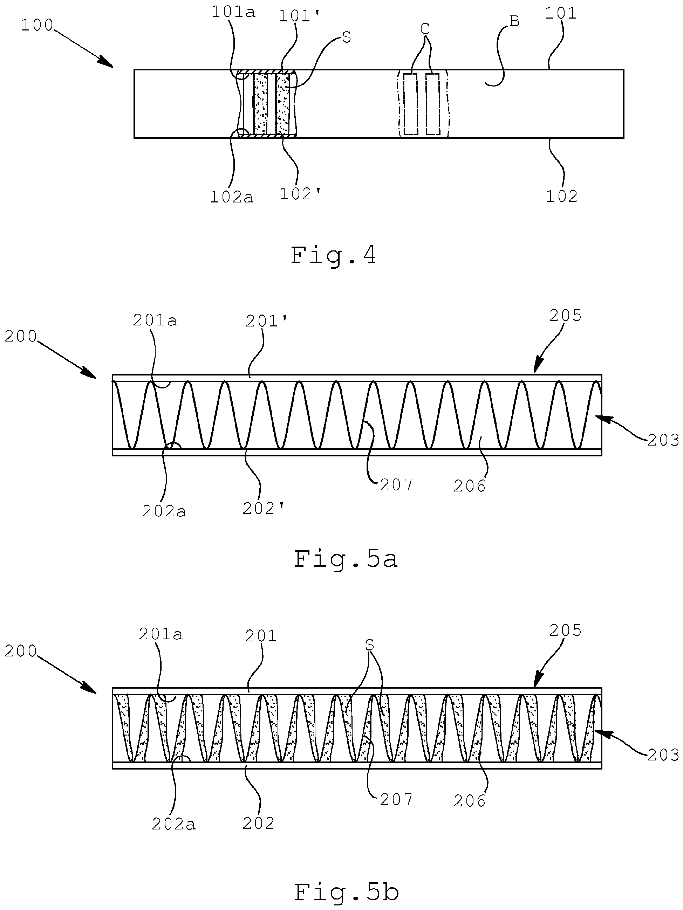

In Fig. 4, the dashed line indicates the contact impression C between the bead S and the inner face B' of the edge banding element B.

According to a preferred aspect, the ratio between the surface of the inner face B' of the edge banding element B and the adhesive material (therefore, the sum of the surfaces of the impressions C) is between 30% and 60% of the total surface of said inner face B'.

Once the abutting step is finished and the hardening time of the adhesive material has passed, the edge banding element B is firmly secured to the edge portion 105 of the panel.

This joining is guaranteed by adhesion of the bead S on one side with the inner surface B' of the edge banding element and on the other with the face of the lamellar element and optionally with the inner faces 101a, 102a of the outer layers 101, 102.

In this way, any stresses applied to the outer surface of the edge banding element B are transmitted in a distributed way, by means of the hardened adhesive material, to the intermediate layer 103 and to the outer layers 101, 102.

In Fig. 4, the dashed line indicates the impression mark C between the bead S and the inner face B' of the edge banding element B.

According to a preferred aspect, the ratio between the surface of the inner face B' of the edge banding element B and the adhesive material (therefore, the sum of the surfaces of the impressions C) is between 30% and 60% of the total surface of said inner face B'.

These values of the contact surface ensure on the one hand suitable tear resistance of the edge banding element B and at the same time prevent the adhesive material from being excessive and therefore from being forced out of the cavity 106.

With reference to Figs. 5a and 5b, there is illustrated a lightweight panel 200 in which the intermediate layer 203, included between the outer layers 201, 202, has a different structure with respect to the panel of Fig. 1.

More in detail, as can be seen in the figures, the lamellar elements 207 are arranged transversely, but not perpendicularly, to the outer layers 201, 202.

Also in this case, the step of depositing the adhesive material is carried out so that the bead S is in contact with a face of the lamellar element 207 and extends between the outer layers 201, 202 of the panel 200.

With the method of the invention it is possible to perform edge banding of a lightweight structure with a limited number of operations and therefore more rapidly with respect to known methods.

Moreover, the method of the invention does not require the use of numerous apparatus or of complex and costly apparatus, limiting both the costs for the purchase of apparatus and the manufacturing costs of the edge banded panel.

The invention has been described purely for non-limiting illustrative purposes, according to some preferred embodiments. The person skilled in the art can find numerous other embodiments and variants, all falling within the scope of protection of the appended claims.

## Claims

1. A method for applying an edge banding element (B) to an edge portion (105, 205) of a lightweight panel (100, 200) provided with a first outer layer (101, 201), with a second outer layer (102, 202) and with an intermediate layer (103, 203), wherein, after cutting the panel to size, the intermediate layer (103, 203), at the edge portion (105, 205), has a plurality of cavities (106, 206) delimited by lamellar elements (107, 207) that extend between the first layer (101) and the second layer (101) and having a front edge (107', 207'), substantially aligned with the edge (105, 205) of the panel, wherein the method comprises at least the steps consisting of:
- depositing in at least one of said cavities (106, 206) an adhesive material in the form of a bead (S), where said bead (S) is positioned against at least one face of said lamellar element (107, 207) and at least partially fills said cavities (106, 206);
- feeding and guiding an edge banding element (B) toward the edge portion (105, 205) of the panel (100, 200), and subsequently;
- abutting said edge banding element (B) with the edge portion (105, 205) of the panel so that an inner face (B') of the edge banding element contacts the bead (S) of adhesive material;
**characterized in that** the panel is cut to size by means of a simple cut so that, after cutting, the front edges (107') of the lamellar elements (107) lie on the plane tangent to the front edges (101', 102') respectively of the first and of the second outer layer (101, 102).

2. Method according to claim 1, **characterized in that** the said edge banding element is applicable to said panel directly after cutting the lightweight panels with a cellular structure made with a light material and typically less rigid and less strong with respect to the material of the outer layers (101, 102).

3. Method according to claim 1 or 2, wherein the adhesive material is deposited in a plurality of said cavities (106, 206) forming the same number of beads (S).

4. Method according to any one of the preceding claims, wherein said bead (S) extends between the inner faces (101a, 201a, 102a, 202a) of the first outer layer (101, 201) and of the second outer layer (102, 202) in contact with at least one of these faces.

5. Method according to any one of the preceding claims, wherein said bead (S) has a portion (S') projecting beyond the edge portion (105, 205) of the panel (100, 200).

6. Method according to any one of the preceding claims, wherein the adhesive material is also applied to the front edge (101a, 102a, 201a, 202a) of the first outer layer (101, 201), of the second outer layer (102, 202) or of both.

7. Method according to any one of the preceding claims wherein said adhesive material comprises a polyurethane glue.

8. Method according to any one of the preceding claims, wherein said adhesive material is fed into the cavities (106, 206) in fluid or semi-fluid form.

9. Method according to any one of the preceding claims, wherein the step consisting of depositing the adhesive material in the at least one cavity (106, 206) is performed by means of at least one nozzle adapted to feed the adhesive material in the form of a thin layer substantially parallel to the lamellar element (107, 207).

10. Method according to any one of the preceding claims, wherein the bead (S) has a substantially constant width.

11. Method according to any one of claims 2 to 10, wherein the beads (S) have substantially the same width.

## Patentansprüche

1. Eine Methode zum Anbringen eines kantenanleimenden Elementes (B) an einen Kantenbereich (105, 205) eines leichten Paneels (100, 200), versehen mit einer ersten Außenfläche (101, 201), mit einer zweiten Außenfläche (102, 202) und mit einer Zwischenfläche (103, 203), wobei nach Zuschneiden des Paneels die Zwischenfläche (103, 203) am Kantenbereich (105, 205) eine Vielzahl von Hohlräumen (106, 206) aufweist, begrenzt von lamellenförmigen Elementen (107, 207), die sich zwischen der ersten Fläche (101) und der zweiten Fläche (101) ausdehnen und eine Vorderkante (107', 207') haben, die im Wesentlichen auf die Kante (105, 205) des Paneels ausgerichtet ist, wobei die Methode mindestens folgende Schritte umfasst, bestehend aus:
- Auftragen in mindestens einen der besagten Hohlräume (106, 206) eines Klebstoffs in Form einer Wulst (S) dort, wo besagte Wulst gegen mindestens eine Seite des besagten lamellenförmigen Elementes (107, 207) platziert ist und mindestens teilweise besagte Hohlräume (106, 206) ausfüllt;
- Einspeisung und Führung eines kantenanleimenden Elementes (B) in Richtung des Kantenbereichs (105, 205) des Paneels (100, 200), und danach
- Anlegen des besagten kantenanleimenden Elementes (B) an den Kantenbereich (105, 205) des Paneels, so dass eine Innenseite (B') des kantenanleimenden Elementes mit der Wulst (S) des Klebstoffes in Kontakt kommt;
**dadurch gekennzeichnet, dass** das Paneel durch einen einfachen Schnitt zugeschnitten wird, so dass nach dem Schneiden die Vorderkanten (107') des lamellenförmigen Elementes (107) auf der Ebene liegen, die tangential zu den Vorderkanten (101', 102') der ersten, beziehungsweise der zweiten Außenfläche (101, 102) verläuft.

2. Methode gemäß Anspruch 1, **dadurch gekennzeichnet, dass** das besagte kantenanleimende Element am Paneel direkt nach dem Schneiden der leichten Paneele anbringbar ist, die eine Zellstruktur aus einem leichten, typischerweise weniger harten und weniger festen Material in Bezug auf das Material der Außenflächen (101, 102) aufweisen.

3. Methode gemäß Anspruch 1 oder 2, wobei der Klebstoff in einer Vielzahl der besagten Hohlräume (106, 206) aufgetragen wird und die gleiche Anzahl von Wülsten (S) formt.

4. Methode gemäß einem jeden der vorhergehenden Ansprüche, wobei sich besagte Wulst (S) zwischen den Innenseiten (101a, 201a, 102a, 202a) der ersten Außenfläche (101, 201) und der zweiten Außenfläche (102, 202) ausdehnt, in Kontakt mit mindestens einer dieser Seiten.

5. Methode gemäß einem jeden der vorhergehenden Ansprüche, wobei besagte Wulst (S) einen Bereich (S') aufweist, der über den Kantenbereich (105, 205) des Paneels (100, 200) herausragt.

6. Methode gemäß einem jeden der vorhergehenden Ansprüche, wobei der Klebstoff auch auf die Vorderkante (101 a, 102a, 201 a, 202a) der ersten Außenfläche (101, 201), der zweiten Außenfläche (102, 202) oder der von beiden aufgetragen wird.

7. Methode gemäß einem jeden der vorhergehenden Ansprüche, wobei besagter Klebstoff einen Polyurethankleber umfasst.

8. Methode gemäß einem jeden der vorhergehenden Ansprüche, wobei besagter Klebstoff in flüssiger oder halbflüssiger Form den Hohlräumen (106, 206) zugeführt wird.

9. Methode gemäß einem jeden der vorhergehenden Ansprüche, wobei der Schritt, der aus dem Auftragen des Klebstoffs in mindestens einen Hohlraum (106, 206) besteht, durch mindestens eine Düse vorgenommen wird, geeignet, den Klebstoff in Form einer dünnen Schicht, die im Wesentlichen parallel zum lamellenförmigen Element (107, 207) verläuft, zuzuführen.

10. Methode gemäß einem jeden der vorhergehenden Ansprüche, wobei die Wulst (S) im Wesentlichen eine konstante Breite besitzt.

11. Methode gemäß einem jeden der Ansprüche 2 bis 10, wobei die Wülste (S) im Wesentlichen die gleiche Breite besitzen.

## Revendications

1. Une méthode d'application d'un élément de bande de chant (B) sur une portion de bord (105, 205) d'un panneau léger (100, 200) pourvu d'une première couche extérieure (101, 201), avec une deuxième couche extérieure (102, 202) et avec une couche intermédiaire (103, 203), où, après la découpe du panneau à la taille, la couche intermédiaire (103, 203), sur la portion du bord (105, 205), possède une multitudes de cavités (106, 206) délimitées par des éléments lamellaires (107, 207) qui s'étendent entre la première couche (101) et la deuxième couche (101) et ont un bord avant (107', 207'), substantiellement aligné avec le bord (105, 205) du panneau, où la méthode comprend au moins les étapes consistant à :
- déposer dans au moins l'une desdites cavités (106, 206) un matériau adhésif sous la forme d'un cordon (S), où ledit cordon (S) est positionné contre au moins une face dudit élément lamellaire (107, 207) et remplit au moins partiellement lesdites cavités (106, 206) ;
- alimenter et guider un élément de bande de chant (B) vers la portion de bord (105, 205) du panneau (100, 200), puis ;
- abouter ledit élément de bande de chant (B) avec la portion de bord (105, 205) du panneau de sorte qu'une face interne (B') de l'élément de bande de chant soit en contact avec le cordon (S) de matériau adhésif ;
**caractérisé par le fait que** le panneau est découpé à la taille au moyen d'une simple coupe de sorte que, après la coupe, les bords avant (107') des éléments lamellaires (107) se trouvent dans le plan tangent aux bords avant (101', 102') respectivement de la première et de la deuxième couche extérieure (101, 102).

2. Méthode selon la revendication 1, **caractérisée par le fait que** ledit élément de bande de chant est applicable audit panneau directement après la coupe des panneaux légers avec une structure cellulaire réalisés avec un matériau léger et typiquement moins rigide et moins résistant par rapport au matériau des couches extérieures (101, 102).

3. Méthode selon la revendication 1 ou 2, où le matériau adhésif est déposé dans une multitude desdites cavités (106, 206) formant le même nombre de cordons (S).

4. Méthode selon l'une des revendications précédentes, où ledit cordon (S) s'étend entre les faces intérieures (101a, 201 a, 102a, 202a) de la première couche extérieure (101, 201) et de la deuxième couche extérieure (102, 202) en contact avec au moins l'une de ces faces.

5. Méthode selon l'une des revendications précédentes, où ledit cordon (S) a une portion (S') dépassant de la portion de bord (105, 205) du panneau (100, 200).

6. Méthode selon l'une des revendications précédentes, où le matériau adhésif est aussi appliqué au bord avant (101a, 102a, 201 a, 202a) de la première couche extérieure (101, 201), de la deuxième couche extérieure (102, 202) ou des deux.

7. Méthode selon l'une des revendications précédentes, où ledit matériau adhésif comprend une colle au polyuréthane.

8. Méthode selon l'une des revendications précédentes, où ledit matériau adhésif est distribué dans les cavités (106, 206) sous forme fluide ou semi-fluide.

9. Méthode selon l'une des revendications précédentes, où l'étape consistant à déposer le matériau adhésif dans au moins une cavité (106, 206) est effectuée au moyen d'au moins une buse adaptée pour distribuer le matériau adhésif sous la forme d'une fine couche substantiellement parallèle à l'élément lamellaire (107, 207).

10. Méthode selon l'une des revendications précédentes, où le cordon (S) a une largeur substantiellement constante.

11. Méthode selon l'une des revendications de 2 à 10, où les cordons (S) ont substantiellement la même largeur.
